# EUROPÄISCHE PATENTSCHRIFT

(11) **EP 1 791 709 B1**
(45) Veröffentlichungstag und Bekanntmachung des Hinweises auf die Patenterteilung: **09.11.2011**
(21) Anmeldenummer: 05787804.3
(22) Anmeldetag: 12.09.2005
(51) Int. Cl.: B60J 7/185

(54) **CABRIOLET-FAHRZEUG**
CABRIOLET-VEHICLE
VEHICULE CABRIOLET

(30) Priorität: 14.09.2004 DE 102004044908
(43) Veröffentlichungstag der Anmeldung: 06.06.2007
(73) Patentinhaber: Wilhelm Karmann GmbH, 49084 Osnabrück (DE)
(72) Erfinder: HABACKER, Norbert, 49565 Bramsche (DE)
(74) Vertreter: Kronthaler, Schmidt & Coll.
(86) Internationale Anmeldenummer: PCT/DE2005/001588
(87) Internationale Veröffentlichungsnummer: WO 2006/039881

(56) Entgegenhaltungen:
- EP-A- 1 072 456
- DE-A1- 4 415 969
- DE-A1- 19 943 315
- DE-A1- 19 944 615

## Beschreibung

Die Erfindung betrifft ein Cabriolet-Fahrzeug mit einem über zumindest ein bewegliches Eingriffsorgan mittelbar oder unmittelbar an einem Windschutzscheibenrahmen sicherbaren Dach nach dem Oberbegriff des Anspruchs 1 sowie eine Verschlußvorrichtung für ein Dach am Windschutzscheibenrahmen.

Es sind zahlreiche Cabriolet-Fahrzeuge bekannt, bei denen das bewegbare Dach in seiner geschlossenen Stellung über zum Beispiel zwei seitlich außen liegende Eingriffsorgane, etwa Drehfallen, Fanghaken oder ähnliches, an dem Windschutzscheibenrahmen des Fahrzeugs sicherbar ist und hierfür die Eingriffsorgane mit einem zentralen Antrieb verbunden sind.

Die DE 44 15 969 C2 zeigt ein derartiges Cabriolet-Fahrzeug, bei dem eine im wesentlichen quer zum Fahrzeug liegende Welle, dort als Gewindekabel 7 bezeichnet, rotierbar ist und dadurch eine Spindel 9 dreht, auf der ein Schieber 10 quer zum Fahrzeug translatorisch bewegbar ist. Über eine gekrümmte Kulissenführung nimmt dieser Schieber bei seiner Bewegung einen zwischen zwei Zylinderstäben geführten weiteren und abgestuften Hebel mit, der über seine Abstufung in Kontakt mit der vorderen Kante eines federbelasteten Schwenk-Antriebshebels, dort als Anlenkhebel 36 bezeichnet, steht. Die Vorderkante ist der Schwenkachse 37 des Schwenkanlenkhebels gegenüber gelegen. Durch das Verschieben des abgestuften Hebels wird ein Ein- und Ausschwenken des Anlenkhebels 36 gesteuert, indem die Stufe auf die vordere Kante trifft und beim weiteren Verschieben einer den Anlenkhebel 36 beaufschlagenden Feder entgegenwirkt. Dadurch, daß die Abstufung zunächst vor die Kante stößt und sich beim Verschieben des Lenkers darüber schieben muß, ist der Kraftverlauf nicht günstig, und es ist ein hoher Kraftaufwand nötig. Hierfür ist eine exakte Kulissenführung des abgestuften Lenkers erforderlich. Insbesondere durch die dafür vorgesehenen linearen Führungselemente ist die Konstruktion aufwendig und schwer und erfordert zudem einen erheblichen Bauraum in Fahrzeugquerrichtung, was angesichts der engen Platzverhältnisse in einer Dachspitze und für einen möglichst entschärften Kopfanprall in diesem Bereich nicht zweckdienlich ist.

Der Erfindung liegt das Problem zugrunde, eine Vereinfachung eines gattungsgemäßen Dachverschlußmechanismus zu erreichen.

Die Erfindung löst dieses Problem durch ein Cabriolet-Fahrzeug mit den Merkmalen des Anspruchs 1 sowie durch eine Verschlußvorrichtung mit den Merkmalen des Anspruchs 13. Hinsichtlich vorteilhafter Ausgestaltungen der Erfindung wird auf die weiteren Ansprüche 2 bis 12 verwiesen.

Durch die Erfindung ist eine günstige Krafteinleitung zur Verlagerung des Schwenk-Antriebshebels gegen seine Federkraft ermöglicht. Der auf den Schwenk-Antriebshebel einwirkende Schwenklenker kann mit seiner Spitze eine Kreisbahn beschreiben und dabei kontinuierlich und langsam steigernd den Schwenk-Antriebshebel gegen seine Federkraft niederdrücken, ohne daß in irgendeinem Moment ein Sprung in der erforderlichen Kraft nötig wäre. Gleichzeitig ist der in Fahrzeugquerrichtung erforderliche Bauraum erheblich verringert, da der für die Bewegung des Schwenk-Antriebslenkers erforderliche Schwenklenker während jeder Phase der Bewegung innerhalb der Quererstreckung des Schwenk-Antriebslenkers gehalten sein kann.

Besonders vorteilhaft ist das seiner Schwenkachse abgewandte Ende des Schwenklenkers an einem Rückenabschnitt des Antriebshebels roll- oder gleitbar, wobei insbesondere für einen geringen Kraftaufwand und einen verschleißarmen Lauf das seiner Schwenkachse abgewandte Ende des Schwenklenkers mit einer Rolle versehen ist.

Wenn der Schwenklenker während seiner Beeinflussung des Schwenk-Antriebshebels eine lotrecht zu seiner Erstreckungsebene liegende Winkelstellung durchläuft und die Abgleit- oder Rollbahn der Spitze des Schwenklenkers an dem Schwenk-Antriebshebel zumindest in Schließposition des Daches einen Anschlag für die Spitze des Schwenklenkers vorsieht, kann dieser in Schließposition in einer Über-Totpunkt-Lage gesichert sein, so daß die auf den Schwenk-Antriebshebel wirkende Federkraft den Schwenklenker in Richtung des Anschlags kraftbeaufschlagt und damit die Schließposition sichert.

Es lassen sich vorteilhaft zur Fernbetätigung Zug-Schub-Stangen verwenden. Damit kann - anders als bei einem zu drehenden Gewindekabel - auch ein Öffnen und Schließen des Daches über eine manuelle Betätigung möglich sein.

Bei einer solchen Krafteinleitung von einem beabstandet liegenden Antrieb über Zug-Schub-Stangen ist es günstig, wenn der Schwenk-Antriebshebel federbeaufschlagt ist und eine Zugkraft auf die Stangen der Feder entgegenwirkt. Dadurch haben die Zug-Schub-Stangen nur in Zugrichtung große Kräfte zu übertragen und werden in Schubrichtung von der Feder unterstützt. Die Stangen können somit gering dimensioniert werden.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine Ansicht von unten in das erfindungsgemäße Fahrzeug mit dem vorderen Dachende (Dachspitze) mit angedeutetem Dachbezug und mit einem nur schematisch und transparent angedeuteten Windschutzscheibenrahmen mit einem zentralen Betätigungsorgan und seitlich außen liegenden Eingriffsgliedern zur Verriegelung (hier nicht dargestellt) am Windschutzscheibenrahmen, die über Zug-SchubStangen mit dem Betätigungsorgan in Wirkverbindung stehen,
- Fig. 2: das Letail II in Fig. 1,
- Fig. 3: eine perspektivische Ansicht von schräg oben der in Fig. 2 dargestellten Verschlußvorrichtung in geschlossener Stellung des Eingriffsorgans,
- Fig. 4: eine perspektivische Ansicht von schräg unten der Verschlußvorrichtung in geschlossener Stellung nach Fig. 3,
- Fig. 5: eine ähnliche Ansicht wie Fig. 4 während der Öffnung des Eingriffsorgans durch Ausschub der Zug-Schub-Stange nach quer außen,
- Fig. 6: eine ähnliche Ansicht wie Fig. 5 in vollständig geöffneter Stellung des Eingriffsorgans,
- Fig. 7: die Verschlußvorrichtung in Stellung nach Fig. 4 in Ansicht von vorne,
- Fig. 8: die Verschlußvorrichtung in Stellung nach Fig. 5 in Ansicht von vorne,
- Fig. 9: die Verschlußvorrichtung in Stellung nach Fig. 6 in Ansicht von vorne,

Das erfindungsgemäße Cabriolet-Fahrzeug 1 ist hier als sog. Soft-Top-Fahrzeug ausgebildet, umfaßt also einen flexiblen Dachbezug 2. Auch eine Ausbildung mit einem oder mehreren festen Dachteil(en) ist gleichwertig möglich.

Ebenso kann das Fahrzeug 1 sowohl ein Zweisitzer sein als auch einen größeren Innenraum mit etwa zwei Sitzreihen hintereinander aufweisen.

Es umfaßt in jedem Fall ein bewegliches Dach 3, das zu seiner Öffnung im rückwärtigen Fahrzeugbereich ablegbar ist. Das in Fahrtrichtung F vordere Ende 4 des Daches 3, das häufig auch als Dachspitze bezeichnet wird, ist mit dem Windschutzscheibenrahmen 5 des Fahrzeugs 1 mittelbar oder unmittelbar zur Sicherung der geschlossenen Dachstellung verriegelbar.

Hierzu dienen in den gezeichneten Ausführungsbeispielen zwei in Fahrzeugquerrichtung q seitlich mehr oder weniger weit außen liegende Eingriffsorgane 6, die hier hakenartig ausgebildet und um horizontale Achsen schwenkbar sind. Sie können jedoch in unterschiedlichsten Weisen ausgebildet sein. Auch ist ihre Anzahl variabel. So kann beispielsweise auch noch ein zentrales Eingriffsorgan zusätzlich vorgesehen sein. Die Eingriffsorgane sind jeweils Bestandteile von Verschlußvorrichtungen 9.

Die Eingrifforgane 6 sind über von einem hier zentralen Betätigungsorgan 8 ausgehende, jeweils mit einer zumindest wesentlichen Erstreckung in Fahrzeugquerrichtung q ausgreifende Kraftvermittler 7 beweglich. Diese sind hier als Zug-Schub-Stangen ausgebildet und ermöglichen somit neben der Verwendung eines elektrischen oder hydraulischen Antriebs auch eine manuelle Betätigung, etwa durch einen schwenkbaren Griff. Das Betätigungsorgan 8 kann auch bezüglich der Fahrzeugquererstreckung außermittig liegen.

Die hier zwei Eingriffsorgane 6 weisen keine gegenüber dem Dach 3 ortsfeste Schwenkachse auf, sondern sind einerseits über einen in Draufsicht großflächigen Schwenk-Antriebshebel 10, der an der Achse 11 am Eingriffsorgan 6 angreift, und andererseits von einem gegenüber gelegenen Steuerhebel 12, der an der Achse 13 am Eingriffsorgan 6 angreift, beweglich gehalten. Der Steuerhebel 12 umgreift hier den Haken 6 gabelförmig.

Der Schwenk-Antriebshebel 10 ist seinerseits an einer gegenüber der Dachspitze 4 ortsfesten Achse 14 schwenkbar gelagert und durch Federkraft 15 in Richtung des Kraftpfeils 17 nach unten und somit in Schließrichtung des Hakens 6 vorgespannt.

Der Steuerhebel 12 ist ebenfalls an einer gegenüber der Dachspitze 4 ortsfesten Achse 16 schwenkbar gelagert, wobei die Achsen 14 und 16 parallel zueinander, jedoch auf verschiedenen Seiten des Eingriffsorgans 6 liegen. Auch die beweglichen Achsen 11 und 13 liegen jederzeit parallel zu den ortsfesten Achsen 14, 16.

Die Zug-Schub-Stangen 7 greifen jeweils an einem Gelenk 18 an einem Betätigungshebel 19 an, der auf einer gegenüber der Dachspitze 4 ortsfesten und weiter unten gelegenen Achse 20 schwenkbar gelagert ist. Auf dieser Achse 20 ist mit einem festen Winkel 21 zu dem Betätigungshebel 19 auch ein Schwenkhebel 22 schwenkbar gelagert, der somit durch Schwenken des Betätigungshebels 19 über die Zug-Schub-Stange 7 in gleichgroßer Auslenkung mit verschwenkbar ist.

Der Schwenkhebel 22 ist nach Art eines Nockens ausgebildet und kann an seinem der Schwenkachse 20 abgewandten Ende ein Gleitstück oder wie hier eine Rolle 23 aufweisen, mit der er auf einem Rückenabschnitt 24 des Schwenk-Antriebshebels 10 roll- oder gleitfähig ist.

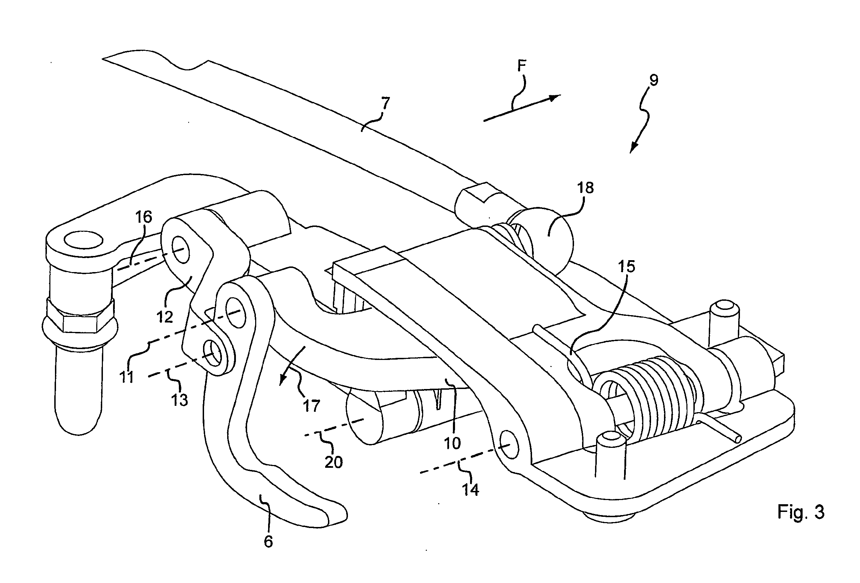

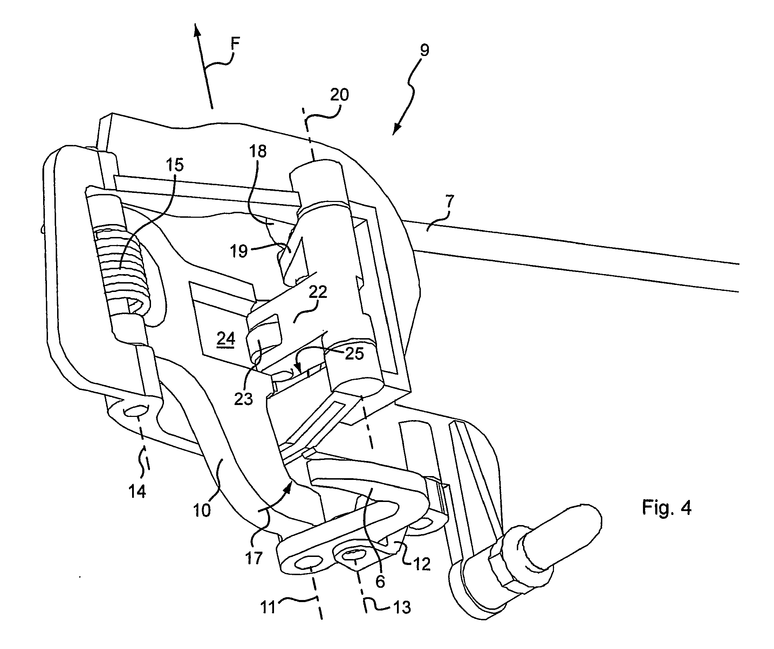

Der Rückenabschnitt 24 ist hier als ausgenommene Bahn ausgebildet und weist zumindest eine Begrenzungskante 25 auf, die sicherstellt, daß der Rollweg der Rolle 23 und somit der Schwenkwinkel des Schwenkhebels 22 begrenzt ist. Dies ermöglicht in der geschlossenen Stellung (Fig. 3, Fig. 4) des Daches 3 eine sehr vorteilhafte und die Schließstellung sichernde Über-Totpunkt-Lage des Schwenkhebels 22.

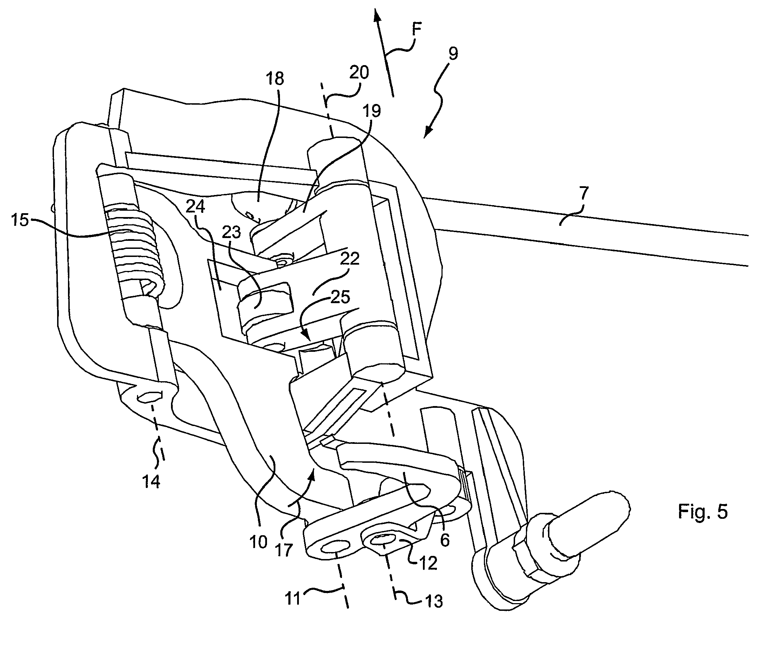

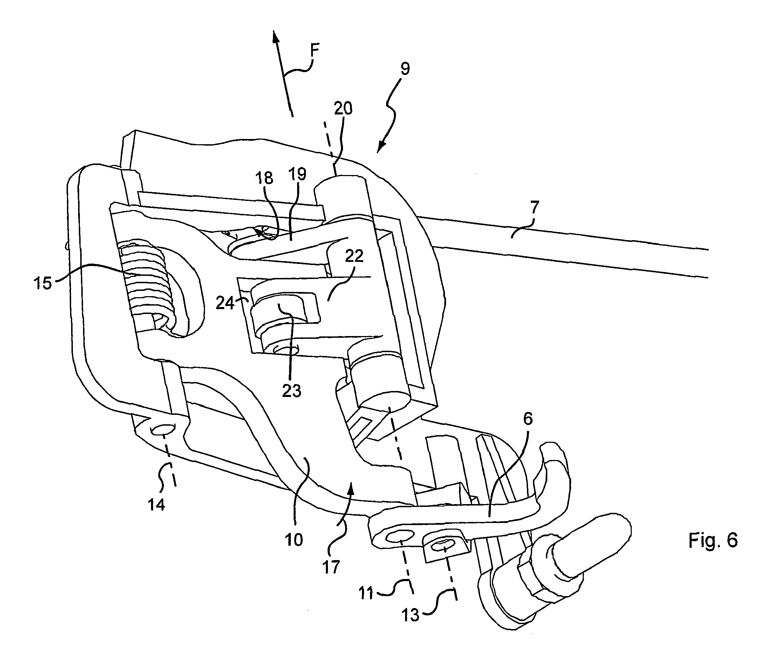

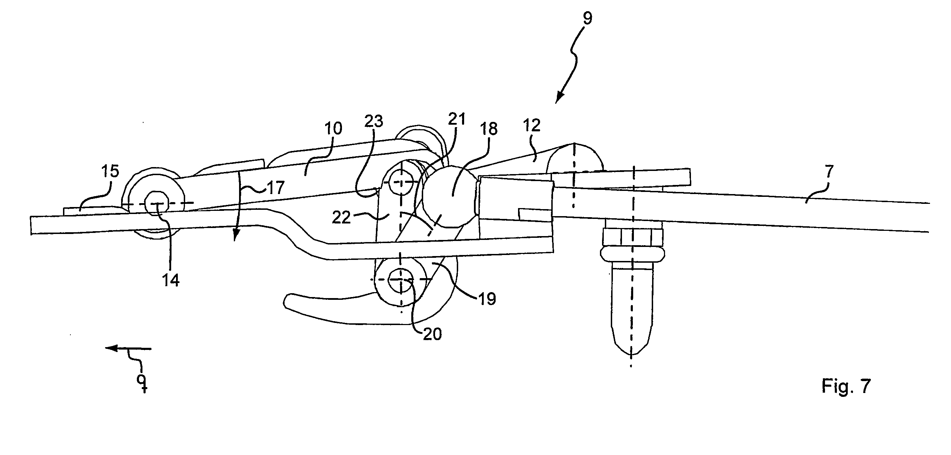

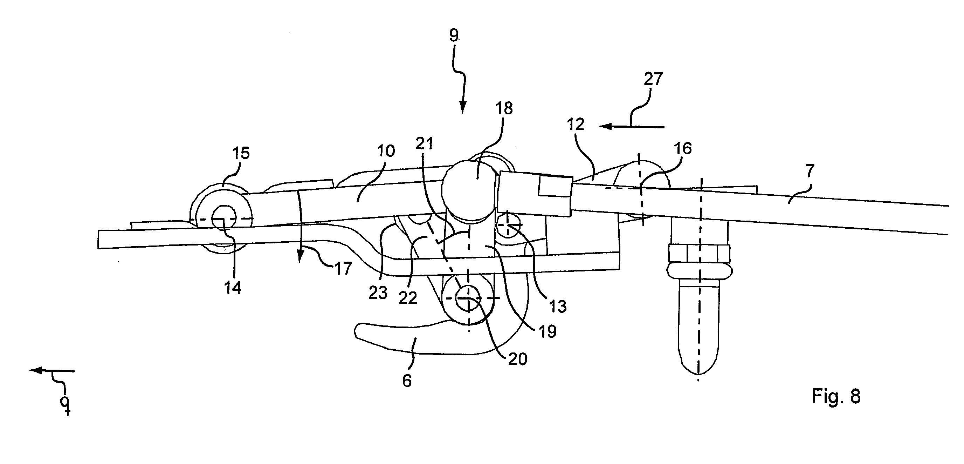

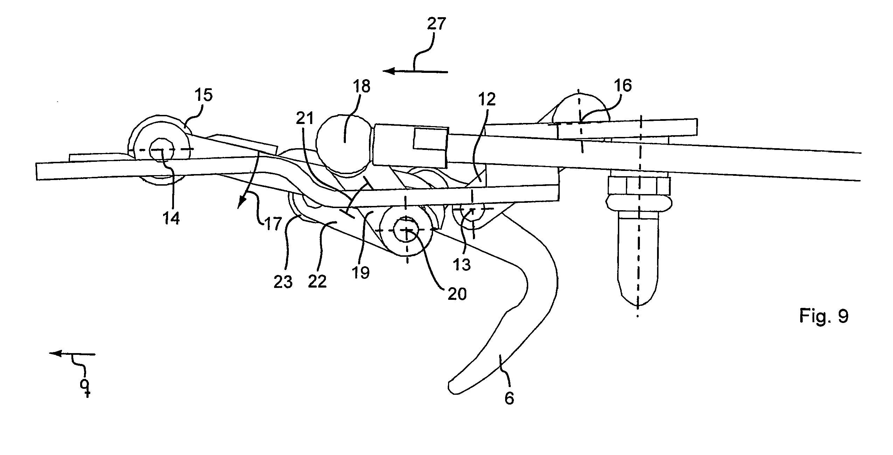

In den Figuren 4 bis 6 bzw. 7 bis 9 ist jeweils der Bewegungsablauf zur Öffnung eines Eingriffsorgans 6 aus seiner geschlossenen, das Dach 3 am Windschutzscheibenrahmen 5 sichernden, in die geöffnete Stellung gezeigt. Der Schwenk-Antriebshebel 10 ist durch seine Feder 15, die auch anders als hier dargestellt ausgebildet sein kann, jederzeit in Richtung des Pfeils 17 im Uhrzeigersinn um seine Achse 14 vorgespannt. Während der Öffnung muß daher gegen diese Kraft angearbeitet werden, wozu der Schwenkhebel 22 dient.

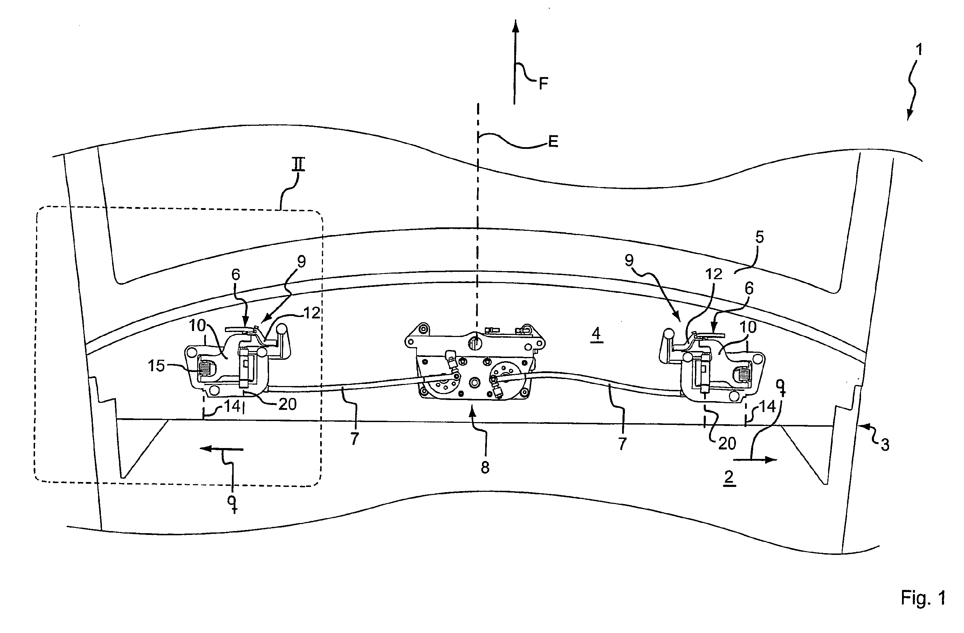

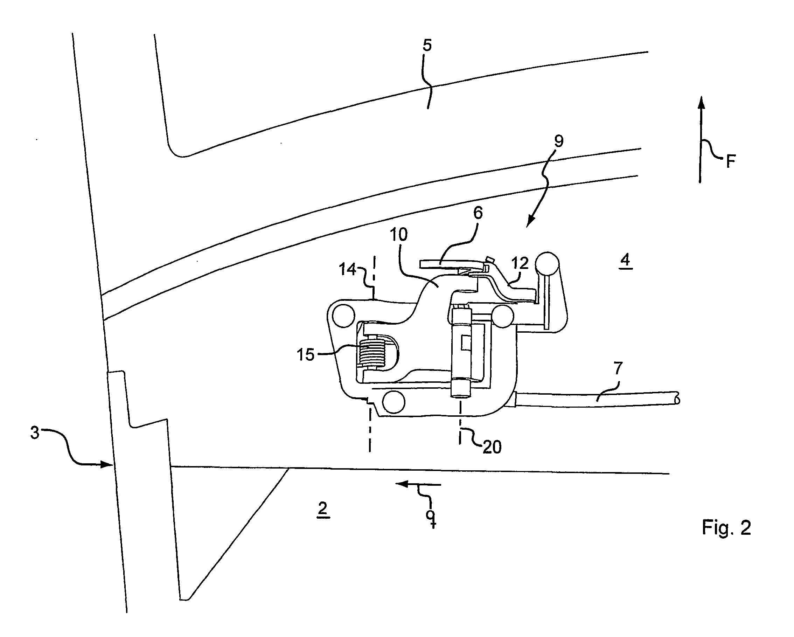

In der zunächst geschlossenen Stellung, die auch in den Figuren 1 bis 3 dargestellt ist, liegt der Schwenkhebel 22 mit seinem freien, seiner Achse 20 abgewandten und hier mit der Rolle 23 versehenen Ende an der Kante 25 an, wobei er bei beginnender Öffnung aus dieser Stellung zunächst eine zur Erstreckungsebene des Schwenk-Antriebshebels 10 lotrechte Schwenkstellung durchlaufen müßte. Die geschlossene Stellung ist daher eine sich selbst sichernde Über-TotpunktStellung, wie oben bereits angedeutet. Eine im Öffnungssinn des Daches 3 und somit in Richtung des Pfeils 26 wirkende Kraft würde daher bestrebt sein, den Schwenk-Antriebshebel 10 abwärts in Richtung des Pfeils 17 zu schwenken, was jedoch das Ende 23 des Schwenkhebels 22 noch fester gegen die Kante 25 preßt und damit blokkiert ist.

Zur Öffnung wird die jeweilige Zug-Schub-Stange 7 in Richtung des Pfeils 27 quer auswärts geschoben, wodurch der Betätigungshebel 19 um die Achse 20 auswärts verschwenkt wird und dabei den im festen Winkel hierzu gehaltenen Schwenkhebel 22 in einem gleichgroßen Winkelmaß mitnimmt. Dieser rollt mit seinem der Schwenkachse abgewandten Ende 23 auf dem Rücken 24 des Schwenk-Antriebshebels 10 ab. Dabei muß nur bis zum Überschreiten des Totpunkts gegen die Federkraft 15 gearbeitet werden, die weitere Öffnungsbewegung läuft unterstützt von der Feder 15 ab und erfordert daher nahezu keinen Kraftaufwand. Die Rolle 23 bewegt sich dabei auf die Schwenkachse 14 zu. Beim Schließen werden die Zug-Schub-Stangen 7 hingegen entgegen der Richtung 27 gezogen, und der Schwenk-Antriebshebel 10 wird mittels des bereichsweise, nämlich mit seinem Kopfbereich, mit einer von der Schwenkachse 14 des Schwenk-Antriebshebels 10 wegführenden Komponente gegenüber dem Schwenk-Antriebshebel 14 bewegbaren Schwenklenkers 22 verlagert. Die Bewegung des nockenartig ausgebildeten Schwenkhebels 22 ist dabei die Schwenkbewegung um die Achse 20, wobei der Kopf 23 des Schwenkhebels 22 auf einer Kreisbahn geführt ist und damit den Schwenk-Antriebshebel 10 stufenlos und mit linear steigenden Kraftaufwand (Hookesches Gesetz) ohne Kraftsprünge gegen die Federkraft verlagert. Durch die Art und Ausbildung der Schwenkbewegung des Schwenklenkers 22 ergibt sich auch ein nur geringer benötigter Kraftaufwand. Alternativ könnte auch der Schwenklenker 22 oder ein ähnliches Bauteil vollständig auf die vertikale Längsmittelebene E zubewegt werden.

In jedem Fall kann die gesamte Bewegungsmechanik des Schwenklenkers 22 innerhalb der Quererstrekkung des Schwenk-Antriebshebels 10 aufgenommen sein und diesen somit nicht in Richtung der Ebene E überragen. Der benötigte Bauraum ist daher gering.

Entsprechend der hier gegenüber dem Bekannten umgekehrten Richtung der Krafteinleitung ist das oder jedes hakenartige Eingriffsorgan 6 zu seiner Öffnung mit einer quer in Richtung der vertikalen Längsmittelebene E weisenden Komponente schwenkbeweglich.

## Patentansprüche

1. Cabriolet-Fahrzeug (1) mit einem beweglichen, in seiner geschlossenen Stellung an einem Windschutzscheibenrahmen (5) halterbaren Dach (3), wobei zur Halterung zumindest ein bewegliches Eingriffsorgan (6) und ein daran mittelbar oder unmittelbar angreifender, federbelasteter (15) Schwenk-Antriebshebel (10) für dessen Bewegung in oder außer Eingriffsstellung vorgesehen sind,
**dadurch gekennzeichnet,**
**daß** der Schwenk-Antriebshebel (10) mittels zumindest eines Schwenklenkers (22) verlagerbar ist, der bei Wirkung gegen die Federkraft (15) zumindest bereichsweise mit einer von der Schwenkachse (14) des Schwenk-Antriebshebels (10) wegführenden Komponente gegenüber dem Schwenk-Antriebshebel (10) bewegbar ist und dadurch diesen verlagert.

2. Cabriolet-Fahrzeug (1) nach Anspruch 1,
**dadurch gekennzeichnet,**
**daß** der Schwenklenker (22) nach Art eines Nockens ausgebildet ist.

3. Cabriolet-Fahrzeug (1) nach einem der Ansprüche 1 oder 2,
**dadurch gekennzeichnet,**
**daß** das seiner Schwenkachse (20) abgewandte Ende des Schwenklenkers (22) an einem Rükkenabschnitt (24) des Schwenk-Antriebshebels (10) roll- oder gleitbar ist.

4. Cabriolet-Fahrzeug (1) nach einem der Ansprüche 2 oder 3,
**dadurch gekennzeichnet,**
**daß** das seiner Schwenkachse (20) abgewandte Ende des Schwenklenkers (22) mit einer Rolle (23) versehen ist.

5. Cabriolet-Fahrzeug (1) nach einem der Ansprüche 1 bis 4,
**dadurch gekennzeichnet,**
**daß** der Schwenklenker (22) während seiner Beeinflussung des Schwenk-Antriebshebels (10) eine lotrecht zu seiner Erstreckungsebene liegende Winkelstellung durchläuft und der Rückenabschnitt (24) an dem Schwenk-Antriebshebel (10) zumindest in Schließposition des Daches (3) einen Anschlag (25) für die Spitze des Schwenklenkers (22) vorsieht.

6. Cabriolet-Fahrzeug (1) nach einem der Ansprüche 1 bis 5,
**dadurch gekennzeichnet,**
**daß** dieses zumindest zwei bewegliche Eingriffsorgane (6) und zumindest ein Betätigungsorgan für diese aufweist, das zur Übertragung einer Betätigungskraft über jeweils mit einer Komponente in Fahrzeugquerrichtung ausgreifende Kraftvermittler (7) mit den Schwenklenkern (22) in Wirkverbindung steht.

7. Cabriolet-Fahrzeug (1) nach Anspruch 6,
**dadurch gekennzeichnet,**
**daß** die Kraftvermittler (7) als Zug-Schub-Stangen ausgebildet sind.

8. Cabriolet-Fahrzeug (1) nach einem der Ansprüche 1 bis 7,
**dadurch gekennzeichnet,**
**daß** der oder jeder Schwenk-Antriebshebel (10) vorgespannt ist und Zug an dem Kraftvermittler (7) der Federkraft entgegenwirkt.

9. Cabriolet-Fahrzeug (1) nach einem der Ansprüche 7 oder 8,
**dadurch gekennzeichnet,**
**daß** die Zug-Schub-Stangen (7) an ihren ausgreifenden Enden über Gelenke (18) jeweils an einem schwenkbaren Betätigungshebel (19 angreifen, der auf derselben Achse (20) wie der jeweilige Schwenklenker (22) zur Betätigung des Schwenk-Antriebshebels (10) gelagert ist.

10. Cabriolet-Fahrzeug (1) nach einem der Ansprüche 1 bis 9,
**dadurch gekennzeichnet,**
**daß** das oder jedes Eingriffsorgan (6) außer mit dem Schwenk-Antriebshebel (10) mit einem Steuerhebel (12) in Verbindung steht.

11. Cabriolet-Fahrzeug (1) nach Anspruch 9,
**dadurch gekennzeichnet,**
**daß** der Steuerhebel (12) an einer zur Schwenkachse (14) des Schwenk-Antriebshebels (10) parallelen Schwenkachse (16) gehalten ist und das oder jedes Eingriffsorgan (6) nur an den beiden genannten Hebeln (10;12) gehalten ist.

12. Cabriolet-Fahrzeug (1) nach einem der Ansprüche 1 bis 11,
**dadurch gekennzeichnet,**
**daß** das oder jedes Eingriffsorgan (6) hakenartig ausgebildet ist und zu seiner Öffnung mit einer quer in Richtung einer vertikalen Längsmittelebene (E) weisenden Komponente öffnet.

## Claims

1. A cabriolet vehicle (1) with a movable roof (3) able to be retained in its closed position on a windscreen frame (5), wherein for retaining at least one movable engagement member (6) and one spring-loaded (15) swivel drive lever (10) which engages the movable engagement member (6) in a direct or indirect manner are provided for the movement thereof in or out of the engaged position, **characterized in that** the swivel drive lever (10) is displaceable by means of at least one swivel arm (22), which with action against the elastic force (15) is movable at least partially with respect to the swivel drive lever (10) with a component leading away from the pivot axis (14) of the swivel drive lever (10), and thereby displaces the swivel drive lever (10).

2. The cabriolet vehicle (1) according to Claim 1, **characterized in that** the swivel connector (22) is constructed in the manner of a cam.

3. The cabriolet vehicle (1) according to one of Claims 1 or 2, **characterized in that** the end of the swivel connector (22) facing away from its pivot axis (20) is able to roll or slide on a back section (24) of the swivel drive lever (10).

4. The cabriolet vehicle (1) according to one of Claims 2 or 3, **characterized in that** the end of the swivel connector (22) facing away from its pivot axis (20) is provided with a roller (23).

5. The cabriolet vehicle (1) according to one of Claims 1 to 4, **characterized in that** the swivel connector (22), during its influencing of the swivel drive lever (10), runs through an angular position lying perpendicular to its plane of extension and the back section (24) provides a stop (25) for the tip of the swivel connector (22) at the swivel drive lever (10) at least in the closed position of the roof (3).

6. The cabriolet vehicle (1) according to one of Claims 1 to 5, **characterized in that** it has at least two movable engagement members (6) and at least one actuating member for the latter, which is in operative connection with the swivel connectors (22) for the transfer of an actuating force via force intermediaries (7) outwardly engaging respectively with a component in the transverse direction of the vehicle.

7. The cabriolet vehicle (1) according to Claim 6, **characterized in that** the force intermediaries (7) are constructed as pull-push bars.

8. The cabriolet vehicle (1) according to one of Claims 1 to 7, **characterized in that** the or each swivel drive lever (10) is prestressed, and traction on the force intermediary (7) counteracts the elastic force.

9. The cabriolet vehicle (1) according to one of Claims 7 or 8, **characterized in that** the pull-push rods (7) engage at their outwardly engaging ends via joints (18) respectively on a pivotable actuating lever (19), which is mounted on the same axis (20) as the respective swivel connector (22) for the actuation of the swivel drive lever (10).

10. The cabriolet vehicle (1) according to one of Claims 1 to 9, **characterized in that** the or each engagement member (6), apart from with the swivel drive lever (10), is connected with a control lever (12).

11. The cabriolet vehicle (1) according to Claim 9, **characterized in that** the control lever (12) is held on a pivot axis (16) parallel to the pivot axis (14) of the swivel drive lever (10), and the or each engagement member (6) is held only at the two said levers (10; 12).

12. The cabriolet vehicle (1) according to one of Claims 1 to 11, **characterized in that** the or each engagement member (6) is constructed in the manner of a hook and opens for its opening with a component pointing transversely in the direction of a vertical longitudinal central plane (E).

## Revendications

1. Cabriolet (1) comprenant un toit (3) mobile, pouvant être maintenu dans sa position fermée sur un cadre de pare-brise (5), au moins un organe d'engrènement (6) mobile et un lever d'entraînement pivotant (10) s'engageant indirectement ou indirectement et sollicité par ressort (15) étant prévus pour le maintien pour son déplacement dans la position d'engrènement ou en dehors de la position d'engrènement, **caractérisé en ce que** le levier d'entraînement pivotant (10) peut être déplacé au moyen d'au moins un bras de pivotement (22), lequel, en agissant contre la force de ressort (15), peut être déplacé au moins par endroits par rapport au levier d'entraînement pivotant (10) avec une composante dirigée à l'opposé de l'axe de pivotement (14) du levier d'entraînement pivotant (10) et ainsi met le levier d'entraînement en mouvement.

2. Cabriolet (1) selon la revendication 1, **caractérisé en ce que** le bras de pivotement (22) est conçu à la façon d'une came.

3. Cabriolet (1) selon l'une quelconque des revendications 1 ou 2, **caractérisé en ce que** l'extrémité, opposée à son axe de pivotement (20), du bras de pivotement (22) peut rouler ou glisser sur une partie dorsale (24) du levier d'entraînement pivotant (10).

4. Cabriolet (1) selon l'une quelconque des revendications 2 ou 3, **caractérisé en ce que** l'extrémité, opposée à son axe de pivotement (20), du bras de pivotement (22) est dotée d'un galet (23).

5. Cabriolet (1) selon l'une quelconque des revendications 1 à 4, **caractérisé en ce que** le bras de pivotement (22) passe par une position d'angle perpendiculaire à son plan d'extension pendant que le levier d'entraînement pivotant (10) est influencé et la partie dorsale (24) prévoit une butée (25) pour la pointe du bras de pivotement (22) sur le levier d'entraînement pivotant (10) au moins dans la position de fermeture du toit (3).

6. Cabriolet (1) selon l'une quelconque des revendications 1 à 5, **caractérisé en ce que** celui-ci présente au moins deux organes d'engrènement (6) mobiles et au moins un organe d'actionnement pour ces organes, lequel est en liaison active avec les bras de pivotement (22) pour la transmission d'une force d'actionnement par des transmetteurs de force (7) se dégageant respectivement avec une composante dans le sens transversal du véhicule.

7. Cabriolet (1) selon la revendication 6, **caractérisé en ce que** les transmetteurs de force (7) sont conçus comme des barres de traction et de poussée.

8. Cabriolet (1) selon l'une quelconque des revendications 1 à 7,**caractérisé en ce que** le ou chaque levier d'entraînement pivotant (10) est précontraint et la traction sur le transmetteur de force (7) s'oppose à la force du ressort.

9. Cabriolet (1) selon l'une quelconque des revendications 7 ou 8, **caractérisé en ce que** les barres de traction et de poussée (7) s'appliquent par leurs extrémités se désengageant par des articulations (18) respectivement sur un levier d'actionnement (19) pivotant, lequel levier est monté sur le même axe (20) que le bras de pivotement (22) respectif pour l'actionnement du levier d'entraînement pivotant (10).

10. Cabriolet (1) selon l'une quelconque des revendications 1 à 9, **caractérisé en ce que** l'organe d'engagement (6) ou chaque organe d'engagement (6) est en liaison avec un levier de commande (12) sauf avec le levier d'entraînement pivotant (10).

11. Cabriolet (1) selon la revendication 9, **caractérisé en ce que** le levier de commande (12) est maintenu sur un axe de pivotement (16) parallèle à l'axe de pivotement (14) du levier d'entraînement pivotant (10) et l'organe d'engrènement (6) ou chaque organe d'engrènement (6) n'est maintenu que sur les deux leviers (10 ; 12) cités.

12. Cabriolet (1) selon l'une quelconque des revendications 1 à 11, **caractérisé en ce que** l'organe d'engrènement (6) ou chaque organe d'engrènement (6) est conçu à la façon d'un crochet et ouvre sur son ouverture avec une composante dirigée transversalement en direction d'un plan médian longitudinal (E) vertical.
